# EUROPEAN PATENT APPLICATION

(11) **EP 2 463 011 A1**
(43) Date of publication of application: **13.06.2012**
(21) Application number: 10194168.0
(22) Date of filing: 08.12.2010
(51) Int. Cl.: B01D 53/04, B01D 53/047

(54) **Filtration device for adsorbing contaminants from a gas stream**

(71) Applicant: CAMFIL AB, 619 33 Trosa (SE)
(72) Inventor: Margez, Raphael, 92270 Bois Colombes (FR); Geoffroy, Ferdinand, 95130 Franconville (FR)
(74) Representative: Kånge, Lars Rikard

(57) **Abstract**

A device for filtration of a contaminated gaseous fluid using a granular adsorbent, comprising a filter housing (1) having a series of flat adjacent compartments (2,3,4) separated by diamond shaped, perforated walls (5) arranged spatially with a vertical diagonal, said series of flat adjacent compartments comprising at least one gaseous fluid admission compartment (2) with three blocked peripheral walls and the fourth wall having an opening (7) for receiving gaseous fluid to be filtered, at least one gaseous fluid evacuation compartment (4) with three blocked peripheral walls and the fourth wall having an opening (13) for evacuating filtered gaseous fluid, at least one filtration compartment (3) arranged between a gaseous fluid admission compartment (2) and a gaseous fluid evacuation compartment (4), with all peripheral walls blocked, and having a top opening (9) for filling with granular adsorbent and a bottom opening (11) for removing the granular adsorbent.

## Description

### Field of the invention

The invention concerns a device for filtration of a contaminated gaseous fluid, using a granular adsorbent and/or adsorbent material.

### Background

Refillable filters using packed beds containing an adsorbent material for filtration of contaminated gaseous fluids, for example air, are often used in the industry. Examples of applications include trapping of toxic gases from chemical processes and trapping of radioactive iodine compounds from nuclear processes. Examples of adsorbents commonly used include activated charcoal, zeolithe (for example for high temperature applications) and activated charcoal impregnated with potassium iodide (useful for the removal of radioactive methyl iodide in nuclear applications).

An example of such a filtration device is described in French patent FR 2 628 001. The filtration device described in FR 2 628 001 consists of a filter housing having compartments formed of diamond shaped, perforated walls, arranged spatially with a vertical diagonal and maintained parallel to one another with gaps using peripheral blocking spacers so as to form series of flat compartments, comprising at least one gaseous fluid admission compartment with three blocked peripheral walls and the fourth wall having an opening for receiving gaseous fluid to be filtered, at least one gaseous fluid evacuation compartment with three blocked peripheral walls and the fourth wall having an opening for evacuating filtered gaseous fluid, at least one filtration compartment arranged between a gaseous fluid admission compartment and a gaseous fluid evacuation compartment, with all peripheral walls blocked, and having a top opening for filling with granular adsorbent and a bottom opening for removing the granular adsorbent.

The diamond shaped cross section of the compartments facilitates filling and emptying of granular adsorbent. The filtration device described in FR 2 628 001 further comprises a common admission collector for the fluid admission compartment(s) and a common evacuation collector for the fluid evacuation compartment(s). The common admission collector is configured to receive gaseous fluid to be filtered from a gaseous fluid conduit upstream of the filtration device and distribute the gaseous fluid to the gaseous fluid admission compartment(s), and the common evacuation collector is configured to receive filtered gaseous fluid from of the gaseous fluid evacuation compartment(s) and direct the gaseous fluid to a gaseous fluid conduit downstream of the filtration device.

### Summary of the invention

In a filtration device as described in FR 2 628 001, the filtration efficiency is highly dependent on the uniform packing of the granular adsorbent and/or adsorbent material in the filtration compartments. Air pockets or other density irregularities in the filter beds due to non-uniform packing of the granular material may lower the filtration efficiency of the filtration device.

Density irregularities in the filter beds may also cause variations in the pressure drop between the filter beds and/or between positions in the same filter bed. This may cause variations in the gas flow such that the granular adsorbent is consumed more rapidly in some positions than in others. In order to maintain sufficient filtration efficiency when the granular adsorbent has been consumed in one position, all of the granular adsorbent must be replaced. Thus, a more uniform packing of the granular adsorbent may reduce the frequency with which the adsorbent must be replaced.

Furthermore, the granular adsorbent and/or adsorbent material generally comprises and/or generates a certain amount of dust or fine particles during filling of the filtration compartment(s). Such dust or fine particles may be undesired, since it may escape through the perforations of the filtration compartment(s) during filtration, thereby contaminating the filtered gaseous fluid.

According to the various aspects disclosed herein there is provided an improved filtration device which may afford more uniform packing of granular adsorbent in the filtration compartment(s), reduce the amount of undesired dust and fine particles in the filtration compartment(s), and reduce the frequency with which the granular adsorbent must be replaced.

In a filtration device as described in FR 2 628 001, the granular adsorbent and/or adsorbent material generally comprises and/or generates a certain amount of dust or fine particles, particularly during filling of the filtration compartment(s). For the purpose of removing such dust or fine particles from the granular adsorbent, the filtration device may be equipped with a vacuum connection, operative for displacing dust and/or fine particles from the filling chamber. Generally said vacuum connection is in fluid connection with a pump or fan operative for displacing air containing dust or fine particles from the filling chamber.

In order to achieve the highest possible removal of dust and fine particles, it is generally desired that the rate of displacement via the vacuum connection should be as high as possible. In practice, the displacement rate in conventional devices, such as the device described in FR 2 628 001, is limited by a number of factors such as the granule size of the granular adsorbent. If the displacement rate is set too high, some granular material may also be removed together with the dust and fine particles.

Furthermore, it has been observed that with a high displacement rate in conventional devices, the uniformity of packing of the granular adsorbent in the filtration compartments may be adversely affected. In a filtration device as described in FR 2 628 001, the filtration efficiency is highly dependent on the uniform packing of the granular adsorbent and/or adsorbent material in the filtration compartments. Air pockets or other density irregularities in the filter beds due to non-uniform packing of the granular material may lower the filtration efficiency of the filtration device.

Density irregularities in the filter beds may also cause variations in the pressure drop between the filter beds and/or between positions in the same filter bed. This may cause variations in the gas flow such that the granular adsorbent is consumed more rapidly in some positions than in others. In order to maintain sufficient filtration efficiency when the granular adsorbent has been consumed in one position, all of the granular adsorbent must be replaced. Thus, a more uniform packing of the granular adsorbent may reduce the frequency with which the adsorbent must be replaced.

According to aspects illustrated herein, there is provided a device for filtration of a contaminated gaseous fluid using a granular adsorbent, comprising
a filter housing having a series of flat adjacent compartments separated by diamond shaped, perforated walls arranged spatially with a vertical diagonal, said series of flat adjacent compartments comprising
at least one gaseous fluid admission compartment with three blocked peripheral walls and the fourth wall having an opening for receiving gaseous fluid to be filtered,
at least one gaseous fluid evacuation compartment with three blocked peripheral walls and the fourth wall having an opening for evacuating filtered gaseous fluid,
at least one filtration compartment arranged between a gaseous fluid admission compartment and a gaseous fluid evacuation compartment, with all peripheral walls blocked, and having a top opening for filling with granular adsorbent and a bottom opening for removing the granular adsorbent, and
a filling chamber arranged on top of the filter housing, said filling chamber comprising a lower portion in fluid connection with the top opening(s) of the filtration compartment(s) and an adsorbent inlet, and an upper portion comprising a vacuum connection, characterized in that said upper and lower portions of the filling chamber are separated by a vacuum distribution device.

The filter housing comprises at least one gaseous fluid admission compartment, at least one gaseous fluid evacuation compartment and at least one filtration compartment arranged between a gaseous fluid admission compartment and a gaseous fluid evacuation compartment. The filter housing may comprise a series of compartments arranged adjacently in the order admission compartment, filtration compartment, evacuation compartment, filtration compartment, admission compartment, etc. Any number of filtration compartments is possible. However, for practical purposes 1 to 25 filtration compartments may generally be suitable. Preferably, the filter housing may comprise an uneven number of filtration compartments, such as 1, 3, 5, 7, 9, 11, 13 or 15 filtration compartments. An uneven number of filtration compartments provides for an equal number of admission and evacuation compartments. For example, a filter housing comprising 7 filtration compartments may have 4 admission compartments and 4 evacuation compartments.

It has been found that the introduction of a vacuum distribution device in the filling chamber of the filtration device allows the displacement to be increased significally without loss of granular material via the vacuum connection. Thereby, vacuum distribution device may also allow for a higher adsorbent filling rate, while still providing sufficient removal of dust and fine particles.

Besides allowing for significally increased displacement rates, it has surprisingly been observed that the vacuum distribution device can also prevent irregularities in the filter beds due to non-uniform packing of the granular adsorbent material.

The vacuum distribution device may comprise a vacuum distribution surface having a plurality of apertures regularly distributed over the surface thereof, and extending across a horizontal cross section of the filling chamber. The vacuum distribution surface may for example comprise a sieve, screen, grid, mesh, grating or perforated sheet. The vacuum distribution surface may preferably extend across an entire horizontal cross section of the filling chamber.

The apertures of the vacuum distribution surface may be suitably dimensioned and distributed to effectively prevent granular material from passing, while still allowing an acceptable displacement rate of air containing dust and fine particles. Suitable dimensions and distribution of the apertures may depend on the size distribution of the granular adsorbent and the size of the dust or fine particles to be removed, and may readily determined by the person skilled in the art. According to an embodiment, the apertures of the vacuum distribution surface may for example be circular and have a diameter in the range of 0.5 to 5 mm, preferably 0.7 to 4.0 mm, 0.8 to 3.0 mm, 0.9 to 2.0 mm, or 1.0 to 1.5 mm. According to an embodiment the longest distance between two adjacent apertures may be 10 mm, preferably 5 mm or 2,5 mm. According to an embodiment, the apertures may be elongate, for example rectangular or rounded rectangular, and have a width in the range of 0.5 to 5 mm, preferably 0.7 to 4.0 mm, 0.8 to 3.0 mm, 0.9 to 2.0 mm, or 1.0 to 1.5 mm.

Vibrations may be used for packing the granular adsorbent in the filtration compartments. It has further been found that when used in a filtration device according to the aspects described herein, vibrations may provide a number of additional advantages. For example, vibrations may help to release dust and fine particles from the granular adsorbent and/or adsorbent material during filling, thereby facilitating dust removal by, for example, vacuum suction. The combination of a vacuum distribution device and a vibration generator may thus significantly improve the dust removal efficiency of the vacuum connection.

According to an embodiment, the filtration device further comprises a vibration generator operative for generating vibrations in the filtration compartment(s) and/or the filling chamber. It has been found that vibrations in a frequency range of 1 to 100 Hz and preferably in the range 10 to 100 Hz, is useful. Thus, according to an embodiment, the vibration generator is operative for generating vibrations in the range of 10 to 100 Hz.

According to a more specific embodiment, there is provided a device for filtration of a contaminated gaseous fluid using a granular adsorbent, comprising
a filter housing having a series of flat adjacent compartments separated by diamond shaped, perforated walls arranged spatially with a vertical diagonal,
said series of flat adjacent compartments comprising
at least one gaseous fluid admission compartment with three blocked peripheral walls and the fourth wall having an opening for receiving gaseous fluid to be filtered,
at least one gaseous fluid evacuation compartment with three blocked peripheral walls and the fourth wall having an opening for evacuating filtered gaseous fluid,
at least one filtration compartment arranged between a gaseous fluid admission compartment and a gaseous fluid evacuation compartment, with all peripheral walls blocked, and having a top opening for filling with granular adsorbent and a bottom opening for removing the granular adsorbent,
a filling chamber arranged on top of the filter housing, said filling chamber comprising a lower portion in fluid connection with the top opening(s) of the filtration compartment(s) and an adsorbent inlet, and an upper portion comprising a vacuum connection, characterized in that said upper and lower portions of the filling chamber are separated by a vacuum distribution device comprising a vacuum distribution surface having a plurality of apertures regularly distributed over the surface thereof, and extending across a horizontal cross section of the filling chamber,
a vibration generator operative for generating vibrations in the filtration compartment(s) and/or the granular adsorbent distribution device, and
a vacuum connection arranged above the granular adsorbent distribution device and operative for displacing dust and/or fine particles from the space above the granular adsorbent distribution device.

According to an embodiment, the filtration device further comprises a granular adsorbent distribution device arranged at the top opening or in an upper portion of the filtration compartment.

The granular adsorbent distribution device may comprise a granular adsorbent distribution surface having a plurality of apertures regularly distributed over the surface thereof, arranged in a horizontal plane extending across the top opening(s) of the filtration compartment(s). The granular adsorbent distribution surface may for example comprise a sieve, screen, grid, mesh, grating or perforated sheet.

The apertures of the granular adsorbent distribution surface may be suitably dimensioned and distributed to obtain a retardation of the granular adsorbent flow, allowing the granular adsorbent to spread out over the adsorbent distribution surface, while still allowing an acceptable flow rate of granular material through the apertures. Suitable dimensions and distribution of the apertures may depend on the size distribution of the granular adsorbent and may readily determined by the person skilled in the art. According to an embodiment, the apertures of the granular adsorbent distribution surface may for example be circular and have a diameter in the range of 1 to 10 mm, such as in the range of 2 to 5 mm or 2 to 3 mm. According to an embodiment the longest distance between two adjacent apertures may be 20 mm, preferably 15 mm or 10 mm. According to an embodiment, the apertures may be elongate, for example rectangular or rounded rectangular, and have a width in the range of 1 to 10 mm, such as in the range of 2 to 5 mm or 2 to 3 mm.

Vibrations may be used for packing the granular adsorbent in the filtration compartments. It has further been found that when used in a filtration device according to the aspects described herein, vibrations may provide a number of additional advantages. For example, vibrations help to spread out the granular adsorbent and/or adsorbent material evenly across the granular adsorbent distribution surface to ensure an even distribution of adsorbent material to the filtration compartment(s). Vibrations may also help to release dust and fine particles from the granular adsorbent and/or adsorbent material during filling, thereby facilitating dust removal by, for example, vacuum suction.

According to an embodiment, the filtration device further comprises a vibration generator operative for generating vibrations in the filtration compartment(s) and/or the granular adsorbent distribution device. It has been found that vibrations in a frequency range of 1 to 100 Hz and preferably in the range 10 to 100 Hz, is useful. Thus, according to an embodiment, the vibration generator is operative for generating vibrations in the range of 10 to 100 Hz.

According to an embodiment, the filtration device may further comprise a vacuum connection arranged above the granular adsorbent distribution device and operative for displacing dust and/or fine particles from the space above the granular adsorbent distribution device.

The granular adsorbent distribution device increases the retention time of the granular adsorbent and/or adsorbent material in the filling chamber, which increases the effect of the vacuum connection in removing dust and fine particles. The vibrations formed by the vibration generator causes dust and fine particles to separate from the granular material such that it may be removed via the vacuum connection. The combination of a granular adsorbent distribution device and a vibration generator may thus significantly improve the dust removal efficiency of the vacuum connection.

According to other aspects illustrated herein, there is also provided a device for filtration of a contaminated gaseous fluid using a granular adsorbent, comprising
a filter housing having a series of flat adjacent compartments separated by diamond shaped, perforated walls arranged spatially with a vertical diagonal,
said series of flat adjacent compartments comprising
at least one gaseous fluid admission compartment with three blocked peripheral walls and the fourth wall having an opening for receiving gaseous fluid to be filtered,
at least one gaseous fluid evacuation compartment with three blocked peripheral walls and the fourth wall having an opening for evacuating filtered gaseous fluid,
at least one filtration compartment arranged between a gaseous fluid admission compartment and a gaseous fluid evacuation compartment, with all peripheral walls blocked, and having a top opening for filling with granular adsorbent and a bottom opening for removing the granular adsorbent,
characterized in that the filtration device comprises a granular adsorbent distribution device arranged at the top opening or in an upper portion of the filtration compartment.

The granular adsorbent distribution device may comprise a granular adsorbent distribution surface having a plurality of apertures regularly distributed over the surface thereof, arranged in a horizontal plane extending across the top opening(s) of the filtration compartment(s). The granular adsorbent distribution surface may for example comprise a sieve, screen, grid, mesh, grating or perforated sheet.

The apertures of the granular adsorbent distribution surface may be suitably dimensioned and distributed to obtain a retardation of the granular adsorbent flow, allowing the granular adsorbent to spread out over the adsorbent distribution surface, while still allowing an acceptable flow rate of granular material through the apertures. Suitable dimensions and distribution of the apertures may depend on the size distribution of the granular adsorbent and may readily determined by the person skilled in the art. According to an embodiment, the apertures of the granular adsorbent distribution surface may for example be circular and have a diameter in the range of 0.5 to 5 mm, preferably 0.7 to 4.0 mm, 0.8 to 3.0 mm, 0.9 to 2.0 mm, or 1.0 to 1.5 mm. According to an embodiment the longest distance between two adjacent apertures may be 10 mm, preferably 5 mm or 2,5 mm. According to an embodiment, the apertures may be elongate, for example rectangular or rounded rectangular, and have a width in the range of 0.5 to 5 mm, preferably 0.7 to 4.0 mm, 0.8 to 3.0 mm, 0.9 to 2.0 mm, or 1.0 to 1.5 mm.

Vibrations may be used for packing the granular adsorbent in the filtration compartments. It has further been found that when used in a filtration device according to the aspects described herein, vibrations may provide a number of additional advantages. For example, vibrations help to spread out the granular adsorbent and/or adsorbent material evenly across the granular adsorbent distribution surface to ensure an even distribution of adsorbent material to the filtration compartment(s). Vibrations may also help to release dust and fine particles from the granular adsorbent and/or adsorbent material during filling, thereby facilitating dust removal by, for example, vacuum suction.

According to an embodiment, the filtration device further comprises a vibration generator operative for generating vibrations in the filtration compartment(s) and/or the granular adsorbent distribution device. It has been found that vibrations in a frequency range of 1 to 100 Hz and preferably in the range 10 to 100 Hz, is useful. Thus, according to an embodiment, the vibration generator is operative for generating vibrations in the range of 10 to 100 Hz.

According to an embodiment, the filtration device may further comprise a vacuum connection arranged above the granular adsorbent distribution device and operative for displacing dust and/or fine particles from the space above the granular adsorbent distribution device.

The granular adsorbent distribution device increases the retention time of the granular adsorbent and/or adsorbent material in the filling chamber, which increases the effect of the vacuum connection in removing dust and fine particles. The vibrations formed by the vibration generator causes dust and fine particles to separate from the granular material such that it may be removed via the vacuum connection. The combination of a granular adsorbent distribution device and a vibration generator may thus significantly improve the dust removal efficiency of the vacuum connection.

According to a more specific embodiment, there is provided a device for filtration of a contaminated gaseous fluid using a granular adsorbent, comprising
a filter housing having a series of flat adjacent compartments separated by diamond shaped, perforated walls arranged spatially with a vertical diagonal,
said series of flat adjacent compartments comprising
at least one gaseous fluid admission compartment with three blocked peripheral walls and the fourth wall having an opening for receiving gaseous fluid to be filtered,
at least one gaseous fluid evacuation compartment with three blocked peripheral walls and the fourth wall having an opening for evacuating filtered gaseous fluid,
at least one filtration compartment arranged between a gaseous fluid admission compartment and a gaseous fluid evacuation compartment, with all peripheral walls blocked, and having a top opening for filling with granular adsorbent and a bottom opening for removing the granular adsorbent,
a filling chamber arranged on top of the filter housing, said filling chamber comprising a lower portion in fluid connection with the top opening(s) of the filtration compartment(s) and an adsorbent inlet, and an upper portion comprising a vacuum connection, characterized in that said upper and lower portions of the filling chamber are separated by a vacuum distribution device comprising a vacuum distribution surface having a plurality of apertures regularly distributed over the surface thereof, and extending across a horizontal cross section of the filling chamber,
a granular adsorbent distribution device arranged at the top opening or in an upper portion of the filtration compartment, said granular adsorbent distribution device comprising a granular adsorbent distribution surface having a plurality of apertures regularly distributed over the surface thereof, arranged in a horizontal plane extending across the top opening(s) of the filtration compartment(s),
a vibration generator operative for generating vibrations in the filtration compartment(s) and/or the granular adsorbent distribution device, and
a vacuum connection arranged above the granular adsorbent distribution device and operative for displacing dust and/or fine particles from the space above the granular adsorbent distribution device.

According to other aspects illustrated herein, there is provided a method of filling granular adsorbent in a device as described above, comprising passing the granular adsorbent through a granular adsorbent distribution device.

According to an embodiment, the method further comprises generating vibrations in the filtration compartment(s) and/or the filling chamber, preferably in the filtration compartment(s) and the granular adsorbent distribution device, during filling operation. The frequency of the vibrations may for example be in the range of 1 to 100 Hz, and preferably in the range of 10 to 100 Hz.

According to an embodiment, the method further comprises displacing dust and/or fine particles from the space above the granular adsorbent distribution device via a vacuum connection.

Features and/or advantages of the filtration device used in the method aspect correspond to the features and/or advantages described above with reference to the device aspect.

The above described and other features are exemplified by the following figures and detailed description.

### Brief description of the drawings

Referring now to the figures, which are exemplary embodiments, and wherein the like elements are numbered alike:
Figure 1 is a side view of a cross section of filtration device with a vacuum distribution device;
Figure 2 is a front view of a cross section of filtration device with a vacuum distribution device;
Figure 3 is a side view of a cross section of filtration device with a vacuum distribution device and a granular adsorbent distribution device;
Figure 4 is a front view of a cross section of filtration device with a vacuum distribution device and a granular adsorbent distribution device.

### Detailed description of preferred embodiments

Embodiments of the filtration device will be described in detail hereinbelow with reference to the drawings.

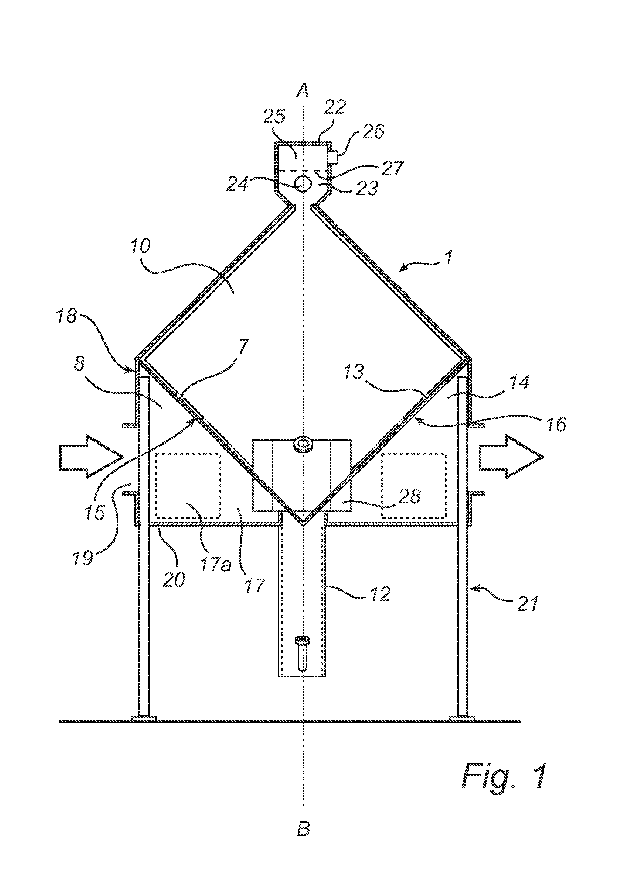

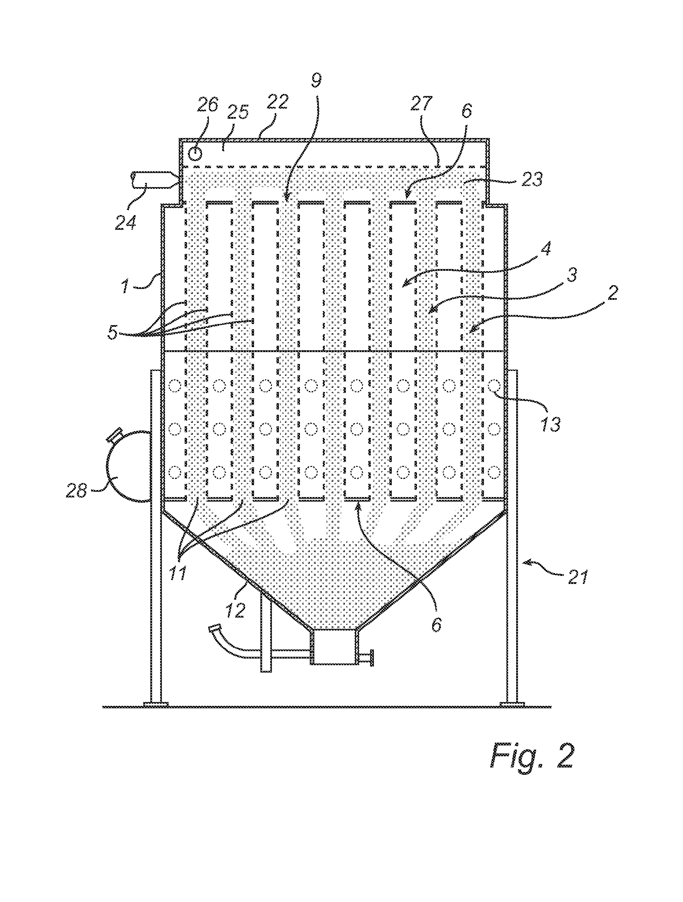

With reference to Figures 1 and 2, there is shown a filter housing 1 having an essentially diamond or lozenge shaped cross section arranged spatially with a vertical diagonal A-B. The interior of the filter housing 1 is divided into a number of flat adjacent compartments 2, 3, 4 separated by diamond shaped, perforated walls 5 arranged spatially with a vertical diagonal. The perforated walls 5 may for example be stainless steel sheeting perforated with a plurality of distributed holes of 1.2 mm diameter.

According to an alternative embodiment, the filter housing and perforated walls may have a truncated diamond (i.e. hexagonal) shaped cross section.

The walls 5 are maintained with a gap between one another using peripheral blocking spacers 6 so as to form several flat compartments 2,3,4.

A first compartment, or admission compartment, 2 comprises peripheral openings 7 leading to a common collector 8 for the admission of gaseous fluid to be filtered.

A second compartment, or filtration compartment, 3 comprises a top opening 9 at or near the top corner of the compartment for supplying granular material to the compartment, and a bottom opening 11 at or near the bottom corner of the compartment leading to a granular material evacuation chute 12.

A third compartment, or evacuation compartment, 4 comprises peripheral openings for evacuation of filtered gaseous fluid 13 leading to a common evacuation collector for filtered gaseous fluid 14.

The number and thickness of the adsorber beds in the filtration device may be selected depending on the required gas flow rates and filtration efficiency. The embodiment of the filtration device shown in Figures 1 and 2 has 7 filtration compartments 4 admission compartments and 4 evacuation compartments.

The number of filtration compartment(s) in the filtration device may be in the range of 1 to 50, preferably in the range of 3 to 25, more preferably in the range of 5 to 10.

The thickness of the packed adsorber bed in the filtration compartment may be in the range of about 10 to 300 mm, preferably in the range of 50 to 200 mm.

All the admission openings 7 of the admission compartments for gaseous fluid 2 are limited to a single bottom side 15 of the diamond 10, while all the openings for evacuation of filtered gaseous fluid 13 of the evacuation compartments 4 are limited to the other bottom side 16 of the diamond 10.

According to an alternative embodiment, the admission openings 7 of the admission compartments for gaseous fluid 2 are limited to an adjacent top and bottom side of the diamond, while all the openings for the evacuation of filtered gaseous fluid 13 evacuation compartments 4 are limited to the opposite adjacent top and bottom side of the diamond.

The openings between the admission or evacuation compartments and their respective collectors may be of circular, rectangular or other suitable shape and may be made up of a single opening or a plurality of openings, for example arranged in a parallel band.

The admission collectors 8 and evacuation collectors 14 have a general triangular prismatic shape so as to form a part of the conduit truncated transversally, presenting on the side of a vertical wall 18 a large flange 19 for connecting to a feed or evacuation conduit (not shown), on the horizontal side, a bottom wall 20 and from the filter housing 1 side, several parallel bands of openings 7 distributed for introduction of gaseous fluid into the admission compartments 2 from the collector 8, several identical parallel bands of openings 13 distributed for evacuation of the filtered gaseous fluid from the evacuation compartments 4 to the collector 14. These prism shaped collectors of are limited at their ends by the triangular walls 17 and may optionally be equipped with inspection traps 17a. The collectors 8 and 14 may form a support structure for the filter housing 1 and may for this purpose, be solidly fixed to four support pillars 21.

The filtration device comprises a filling chamber 22 arranged on top of the filter housing. The filling chamber extends across the top opening(s) 9 of the filtration compartments such that granular adsorbent can be fed into the filtration compartments via the filling chamber. The filling chamber 22 comprises a lower portion 23 in fluid connection with the top opening(s) 9 of the filtration compartment(s) 3 and having an adsorbent inlet 24 for feeding granular adsorbent to the filtration compartments. The filling chamber 22 further comprises an upper portion 25 comprising a vacuum connection 26. The upper and lower portions of the filling chamber are separated by a vacuum distribution device 27. The filling chamber may be connected to a suitable adsorbent filling device (not shown), such as a pneumatic conveyor unit operative for feeding adsorbent from the inlet 24 towards the opposite end of the filling chamber.

The vacuum connection 26 is an outlet port configured to be connected to a suitable vacuum source, such as a fan or pump (not shown), optionally via a suitable conduit. When the vacuum source is operated, an underpressure is created in the filling compartment, and air is displaced from the filtration compartment(s) 3 through the vacuum distribution device 27 via the vacuum connection 26. The vacuum connection 26 is operative for displacing sufficient air during the filling process, such that dust generated in the filling chamber and/or filtration compartment(s) may be removed, while the granular adsorbent and/or adsorbent material remains.

The vacuum distribution device 27 comprises a vacuum distribution surface having a plurality of apertures regularly distributed over the surface thereof, and extending across a horizontal cross section of the filling chamber. The vacuum distribution surface may for example comprise a sieve, screen, grid, mesh, grating or perforated sheet. The vacuum distribution surface may for example be a perforated stainless steel sheet having circular holes of 1.2 mm diameter distributed over the granular adsorbent distribution surface with a centre to centre distance between adjacent holes of 2.25 mm.

The apertures of the vacuum distribution surface may also have shapes other than circular The apertures may for example be square or elongate, such as rectangular or rounded rectangular slits.

The filtration device further comprises a vibration generator 28 operative for generating vibrations in the filtration compartment(s) 3 and/or the filling chamber 22. The vibration generator 28 may comprise an unbalanced electric motor attached to the filter housing 1 such that an alternating force is applied to the filter housing during operation of the vibration generator 28. The vibration generator 28 is operative for generating vibrations in the range of 10 to 100 Hz in the filtration compartment(s) and/or the granular adsorbent distribution device.

The vacuum connection 26 is especially efficient when combined with a vacuum distribution device 27 and/or a vibration generator 28. The vacuum distribution device 27 allows for a higher displacement rate via the vacuum connection, which increases the effect of the vacuum connection in removing dust and fine particles. The vibrations formed by the vibration generator 28 causes dust and fine particles to separate from the granular material such that it may be removed via the vacuum connection. The combination of a vacuum distribution device 27 and a vibration generator 28 may thus significantly improve the dust removal efficiency of the vacuum connection.

During filling operation, the vacuum distribution device 27 distributes the suction within the filling chamber while adsorbent material is introduced into the filling chamber via the adsorbent inlet 24. This way, density irregularities in the filter beds due to non uniform suction may be avoided. Uniform, reliable and reproducible packing is important to the operation of refillable filters using granular adsorbents, especially in safety oriented applications such as chemical or nuclear industries.

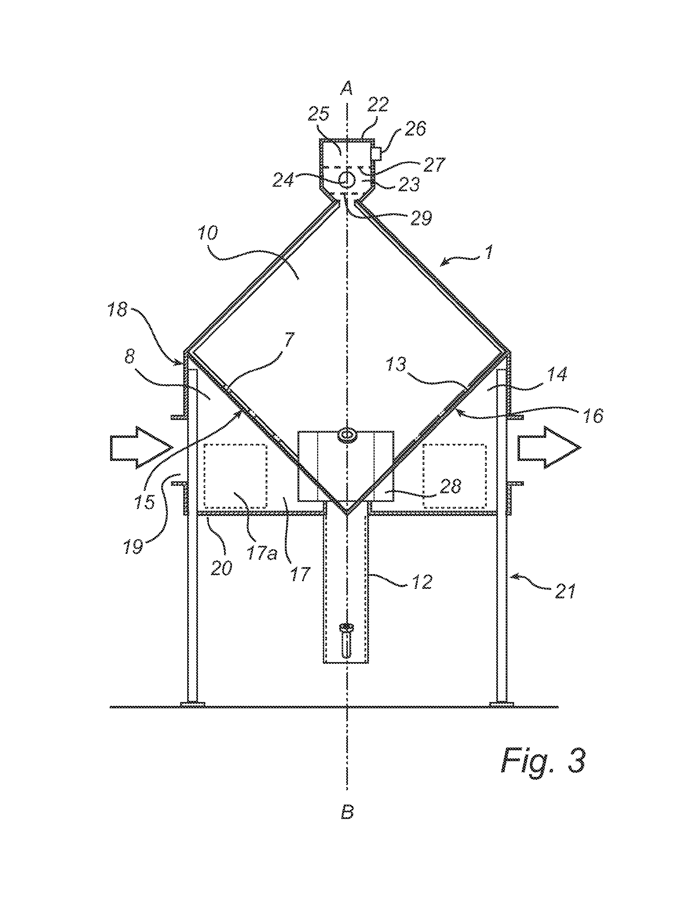

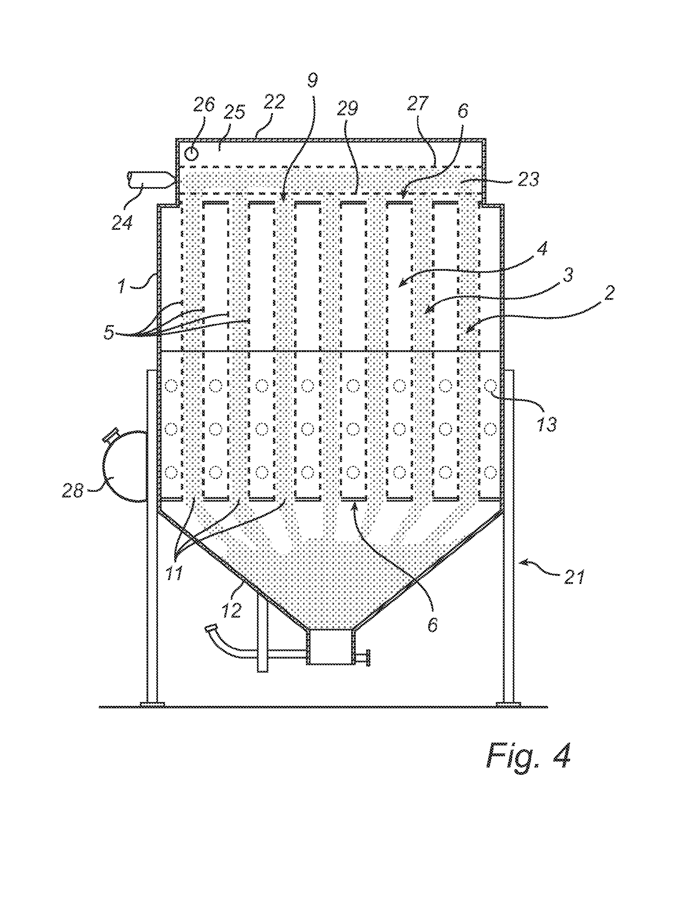

According to an embodiment schematically depicted in Figures 3 and 4, the filtration device further comprises a granular adsorbent distribution device 29 arranged at the top opening or in an upper portion of the filtration compartment. The granular adsorbent distribution device 29 comprises a granular adsorbent distribution surface having a plurality of apertures *regularly* distributed over the surface thereof, arranged in a horizontal plane extending across the top opening(s) of the filtration compartment(s). The distribution surface may be a perforated stainless steel sheet having circular holes of 5 mm diameter distributed over the granular adsorbent distribution surface with a centre to centre distance between adjacent holes of 15 mm.

The apertures of the granular adsorbent distribution 29 surface may also have shapes other than circular The apertures may for example be square or elongate, such as rectangular or rounded rectangular slits.

The vacuum connection 26 is especially efficient when combined with a granular adsorbent distribution device 29 and/or a vibration generator 28. The granular adsorbent distribution device 29 increases the retention time of the granular adsorbent and/or adsorbent material in the filling chamber 22, which increases the effect of the vacuum connection in removing dust and fine particles. The vibrations formed by the vibration generator 28 causes dust and fine particles to separate from the granular material such that it may be removed via the vacuum connection. The combination of a granular adsorbent distribution device 29 and a vibration generator 28 may thus significantly improve the dust removal efficiency of the vacuum connection.

During filling operation, adsorbent material is introduced into the filling chamber via the adsorbent inlet 24, by the pneumatic conveyor. The adsorbent material is collected by the granular adsorbent distribution device 29 which distributes the granular adsorbent evenly to the filtration compartments 3. The granular adsorbent distribution device 29 also prevents the introduction of larger lumps or agglomerates of granules into the filtration compartments, where they may otherwise cause air pockets or other density irregularities in the filter beds. Uniform, reliable and reproducible packing is important to the operation of refillable filters using granular adsorbents, especially in safety oriented applications such as chemical or nuclear industries.

The vacuum connection separates dust and fine particles from the granular adsorbent. The vibrations formed by the vibration generator 28 helps to ensure efficient packing of the granular adsorbent and/or adsorbent material in the filtration compartments 3. The vibrations formed by the vibration generator also helps to spread out the granular adsorbent and/or adsorbent material evenly across the granular adsorbent distribution surface to ensure an even distribution of adsorbent material to the filtration compartment(s). Furthermore, the vibrations formed by the vibration generator 28 helps to release dust and fine particles from the granular adsorbent and/or adsorbent material, thereby enhancing the dust removal efficiency of the vacuum connection.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A device for filtration of a contaminated gaseous fluid using a granular adsorbent, comprising
a filter housing having a series of flat adjacent compartments separated by diamond shaped, perforated walls arranged spatially with a vertical diagonal, said series of flat adjacent compartments comprising
at least one gaseous fluid admission compartment with three blocked peripheral walls and the fourth wall having an opening for receiving gaseous fluid to be filtered,
at least one gaseous fluid evacuation compartment with three blocked peripheral walls and the fourth wall having an opening for evacuating filtered gaseous fluid,
at least one filtration compartment arranged between a gaseous fluid admission compartment and a gaseous fluid evacuation compartment, with all peripheral walls blocked, and having a top opening for filling with granular adsorbent and a bottom opening for removing the granular adsorbent, and
a filling chamber arranged on top of the filter housing, said filling chamber comprising a lower portion in fluid connection with the top opening(s) of the filtration compartment(s) and an adsorbent inlet, and an upper portion comprising a vacuum connection, **characterized in that** said upper and lower portions of the filling chamber are separated by a vacuum distribution device.

2. A device according to claim 1, wherein said vacuum distribution device comprises a vacuum distribution surface having a plurality of apertures regularly distributed over the surface thereof, and extending across a horizontal cross section of the filling chamber.

3. A device according to claim 2, wherein said granular vacuum distribution surface comprises a sieve, screen, grid, mesh, grating or perforated sheet.

4. A device according to claim 2, wherein said apertures are circular and have a diameter in the range of 0.5 to 5 mm, preferably 0.7 to 4.0 mm, 0.8 to 3.0 mm, 0.9 to 2.0 mm, or 1.0 to 1.5 mm.

5. A device according to claim 2, wherein the longest distance between two adjacent apertures is 10 mm, preferably 5 mm or 2,5 mm.

6. A device according to claim 2, wherein said apertures are elongate, for example rectangular or rounded rectangular, and have a width in the range of 0.5 to 5 mm, preferably 0.7 to 4.0 mm, 0.8 to 3.0 mm, 0.9 to 2.0 mm, or 1.0 to 1.5 mm.

7. A device according to any one of the preceding claims, further comprising a granular adsorbent distribution device arranged at the top opening or in an upper portion of the filtration compartment.

8. A device according to claim 7, wherein said granular adsorbent distribution device comprises a granular adsorbent distribution surface having a plurality of apertures *regularly* distributed over the surface thereof, arranged in a horizontal plane extending across the top opening(s) of the filtration compartment(s).

9. A device according to claim 8, wherein said granular adsorbent distribution surface comprises a sieve, screen, grid, mesh, grating or perforated sheet.

10. A device according to claim 8, wherein said apertures are circular and have a diameter in the range of 1 to 10 mm, such as in the range of 2 to 5 mm or 2 to 3 mm.

11. A device according to claim 8, wherein the longest distance between two adjacent apertures is 20 mm, preferably 15 mm or 10 mm.

12. A device according to claim 8, wherein said apertures are elongate, for example rectangular or rounded rectangular, and have a width in the range of 0.5 to 5 mm, preferably 0.7 to 4.0 mm, 0.8 to 3.0 mm, 0.9 to 2.0 mm, or 1.0 to 1.5 mm.

13. A device according to any one of the preceding claims, further comprising a vibration generator operative for generating vibrations in the filtration compartment(s) and/or the filling chamber.

14. A device according to claim 13, wherein vibration generator is operative for generating vibrations in the range of 10 to 100 Hz.
